Europäisches Patentamt

European Patent Office

Office européen des brevets

(11) Numéro de publication: **0 245 151**
**A1**

# DEMANDE DE BREVET EUROPEEN

(21) Numéro de dépôt: **87400955.8**

(22) Date de dépôt: **24.04.87**

(51) Int. Cl.⁴: **C 01 G 23/00**
**C 04 B 35/46**

(30) Priorité: **29.04.86 FR 8606206**

(43) Date de publication de la demande:
**11.11.87 Bulletin 87/46**

(84) Etats contractants désignés: **DE GB IT NL**

(71) Demandeur: **COMPAGNIE EUROPEENNE DE COMPOSANTS ELECTRONIQUES LCC**
**50, rue Jean -Pierre Timbaud B.P. 301**
**F-92402 Courbevoie (FR)**

(72) Inventeur: **Beauger, Alain**
**THOMSON-CSF SCPI 19, avenue de Messine**
**F-75008 Paris (FR)**

**Wittmann, Roland**
**THOMSON-CSF SCPI 19, avenue de Messine**
**F-75008 Paris (FR)**

(74) Mandataire: **Ruellan-Lemonnier, Brigitte et al**
**THOMSON-CSF SCPI 19, avenue de Messine**
**F-75008 Paris (FR)**

(54) **Procédé de fabrication du titanate de baryum par voie chimique.**

(57) La présente invention concerne la synthèse chimique du titanate de baryum par complexation du titane avec des éléments lui conférant une grande stabilité en solution.

Le procédé selon l'invention consiste à former, en milieu acide, le complexe péroxydé du titane, à dissoudre dans la solution un sel de baryum en quantité stoechiométrique et à précipiter le pertitanate de baryum par élévation du pH au moyen d'ammoniaque.

EP 0 245 151 A1

**Description**

PROCEDE DE FABRICATION DU TITANATE DE BARYUM PAR VOIE CHIMIQUE.

La présente invention concerne la synthèse chimique du titanate de baryum par complexation du titane avec des éléments lui conférant une grande stabilité en solution.

Le titanate de baryum est connu depuis longtemps pour ses propriétés diélectriques. En particulier, sa constante diélectrique élevée (environ 2000 à une température de 20°C) le rend apte à la fabrication de condensateurs sous forme de disques ou de plaquettes, ou de condensateurs multicouches.

La synthèse thermique du matériau a été longtemps la seule méthode employée pour son élaboration. Selon cette méthode, un mélange intime de poudres de carbonate de baryum et d'oxyde de titane est porté à une température comprise entre 1000 et 1300°C. Ce procédé à l'avantage d'être simple à mettre en oeuvre mais il n'est pas exempt d'inconvénients. En premier lieu, les mécanismes de réaction conduisent à la formation de phases indésirables dont l'élimination est malaisée. D'autre part, la réalisation de poudres de granulométrie fine (diamètre des grains de l'ordre du micron) et resserrée que rendent nécessaire les évolutions récentes de l'art céramique appliqué à ce domaine, ne peut être effectuée par cette méthode que si le matériau résultant de la synthèse thermique est soumis à un broyage prolongé. Il en découle généralement une pollution importante du produit par des éléments étrangers du fait de l'abrasion des constituants du système de broyage employé.

La recherche a donc porté sur d'autres procédés de préparation qui, s'éloignant ainsi des procédés traditionnels de la céramique, font largement appel aux techniques de la chimie. Ces procédés permettent l'obtention de grains d'un diamètre moyen compris entre 0,1 et 0,5 µ.

D'une façon tout à fait générale, le principe des méthodes chimiques est d'obtenir la précipitation d'un composé contenant outre une partie volatilisable (radical organique, groupements hydroxyles, par exemple), du baryum et du titane en rapport stoechiométrique 1/1.

On peut classer ces procédés chimiques en deux groupes selon que le milieu réactionnel est organique ou aqueux.

La technique sol-gel consiste en l'hydrolyse d'alcoxydes de titane et d'alcoxydes de baryum en milieu organique, pour une quantité stoechiométrique d'eau. L'hydroxyde de baryum et l'oxyde de titane hydraté coprécipitent. Il est bien évident que, sauf à admettre des cinétiques rigoureusement égales pour l'un et l'autre constituant, le grain de matériau obtenu avant cycle thermique (sol-gel) est inhomogène. D'autre part, les précurseurs sont coûteux, notamment l'alcoxyde de baryum, la mise en oeuvre nécessite des précautions (risques d'incendies). La régénération du milieu (alcool) n'apparaît pas aisée.

Les techniques utilisant un milieu aqueux visent à provoquer la formation d'un précipité contenant par molécule un atome de titane et un atome de baryum. Ainsi une "stoechiométrie absolue" est-elle envisageable. Cependant, différents phénomènes peuvent compromettre dans la pratique le résultat. En effet, la décomposition des radicaux organiques génère fréquemment l'anhydride carbonique avec le risque de formation de carbonate de baryum. C'est notamment le cas de l'acide oxalique et des oxalates pour lesquels cette évolution est systématique. De plus, les différents complexes du titane sont d'une stabilité médiocre, ce qui conduit souvent à des hydrolyses partielles avec formation d'oxyde de titane hydraté en tant que constituant parasite.

Comme on le voit, les procédés de synthèse thermique et chimique ne sont pas satisfaisants. Afin de pallier ces inconvénients, l'invention propose un procédé de synthèse chimique utilisant la complexation du titane par l'eau oxygénée. Ce procédé consiste à former, en milieu acide, le complexe péroxydé du titane, à dissoudre dans la solution un sel de baryum en quantité stoechiométrique et à précipiter le pertitanate de baryum par élévation du pH au moyen d'ammoniaque.

L'invention a donc pour objet un procédé de fabrication du titanate de baryum par voie chimique, caractérisé en ce qu'il comprend les étapes suivantes:

- 1ère étape : formation d'un complexe du titane en solution aqueuse par le péroxyde d'hydrogène et un agent de complexation,
- 2ème étape : dissolution dans ladite solution d'une quantité stoechiométrique de baryum introduite sous forme de sel,
- 3ème étape : élévation du pH de la solution par addition d'une base jusqu'à une valeur déterminée,
- 4ème étape : filtration du précipité obtenu,
- 5ème étape : traitement du précipité jusqu'à obtention d'une poudre.

La mise au point du procédé selon l'invention a clairement montré que la composition du précipité variait au fur et à mesure de la réaction. Selon ce procédé, la formation de carbonate de baryum est totalement exclue du fait de l'absence de carbone dans les réactions. Le procédé confère à un complexe du titane exempt de carbone une stabilité nécessaire à l'obtention de métatitanate de baryum stoechiométrique. Dans un premier temps, le titane forme avec le péroxyde d'hydrogène et un agent de complexation tel que l'acide éthylène diamine tétracétique ou ses sels un complexe mixte. C'est là un point important de l'invention que l'utilisation de ce complexe mixte dont la stabilité est bien supérieure à ceux couramment utilisés pour éviter l'hydrolyse du titane, notamment à des pH supérieurs à 7. Une quantité stoechiométrique de baryum introduite sous forme de sel soluble (par exemple un chlorure ou un nitrate) est ensuite dissoute dans la solution. Le milieu réactionnel est alors acide car il y a formation d'acide chlorhydrique. On élève le pH de la solution par addition d'une base (par exemple l'ammoniaque) jusqu'à l'obtention d'une valeur de pH comprise entre 5 et 9,5 et de préférence entre 7 et 9, cette dernière valeur étant préférée compte tenu des caractéristiques désirées.

La précipitation d'un composé de couleur jaune est observée dès que le pH atteint la valeur 5. Le rendement de la réaction est d'autant meilleur que le pH final est plus élevé. Les analyses effectuées sur les produits obtenus montrent que la stoechiométrie du précipité (Ti/Ba = 1) est indépendante du pH final choisi.

Le solide est séparé de la phase liquide par filtration. Il est soigneusement rincé avec de l'eau désionisée puis séché en étuve à la température de 100°C. Le cycle de cristallisation peut alors être effectué et la température de calcination est de 1100°C pendant deux heures.

Au terme de cette séquence, la poudre apparaît comme constituée de sphéroïdes de diamètre inférieur à 0,5 $\mu$ et dont la répartition granulométrique est très resserrée. La méthode d'analyse par diffraction des rayons X ne permet pas de déceler de combinaisons autres que le titanate de baryum BaTiO$_3$. Ce matériau présente pour des valeurs de pH supérieures à 6 ou 7 la structure pseudocubique et pour des valeurs inférieures la structure quadratique.

Quelques exemples de réalisation vont illustrer le procédé selon l'invention. Ces exemples sont donnés à titre non limitatif.

Exemple I.

La solution complexante est obtenue en ajoutant 16,858 g de sel disodique de l'acide éthylène diamine tétracétique à 300 cm$^3$ d'une solution d'eau oxygénée à environ 16 volumes et refroidie à une température inférieure à 15°C . On introduit ensuite 5 cm$^3$ de tétrachlorure de titane TiCl$_4$ puis 11,836 g de nitrate de baryum Ba(NO$_3$)$_2$. Après dissolution totale de ces produits le pH de la solution est élevé progressivement par addition d'une base jusqu'à la valeur de 5,75. Il est avantageux d'utiliser l'ammoniaque pour éviter l'introduction d'autres cations.

Le précipité obtenu est filtré, rincé, séché à 100°C puis calciné selon un cycle thermique comportant un palier de deux heures à une température comprise entre 1000 et 1300°C, de préférence à 1080°C. La poudre obtenue est constituée de sphéroïdes de diamètre moyen égal à 0,5 $\mu$. Sa structure apparaît quadratique par examen du spectre de diffraction des rayons X. Le diffractogramme ne fait apparaître aucune autre structure correspondant à une phase indésirable. Le rendement de la réaction est d'environ 15%.

A la place du nitrate de baryum on peut également et avantageusement utiliser du chlorure de baryum BaCl$_2$ ou du bromure de baryum BaBr$_2$.

Exemple II.

Le procédé utilisé est identique à celui explicité à l'exemple I sauf pour l'addition d'ammoniaque qui est poursuivie jusqu'à l'obtention d'un pH de 7,35.

La structure est cubique, la granulométrie montre une dispersion très resserrée autour de la valeur moyenne de 0,4 $\mu$. Par ailleurs aucune autre structure n'est décelable par diffraction des rayons X. Le rendement de la réaction est d'environ 90 %.

Exemple III.

Le procédé ne diffère des deux exemples précédents que par la valeur du pH final. L'addition d'ammoniaque est interrompue au voisinage de pH 9,1.

Les résultats sont comparables à ceux relatés dans l'exemple II. La granulométrie est très resserrée vers 0,35 microns. La structure est cubique et ne révèle que le métatitanate de baryum. Le rendement de la réaction avoisine 90 %.

**Revendications**

1. Procédé de fabrication du titanate de baryum par voie chimique, caractérisé en ce qu'il comprend les étapes suivantes:
   - 1ère étape : formation d'un complexe du titane en solution aqueuse par le péroxyde d'hydrogène et un agent de complexation,
   - 2ème étape : dissolution dans ladite solution d'une quantité stoechiométrique de baryum introduite sous forme de sel,
   - 3ème étape : élévation du pH de la solution par addition d'une base jusqu'à une valeur déterminée,
   - 4ème étape : filtration du précipité obtenu,
   - 5ème étape : traitement du précipité jusqu'à obtention d'une poudre.

2. Procédé selon la revendication 1, caractérisé en ce que l'agent de complexation est l'acide éthylène diamine tétracétique ou l'un de ses sels.

3. Procédé selon la revendication 2, caractérisé en ce que l'agent de complexation est le sel disodique de l'acide éthylène diamine tétracétique.

4. Procédé selon l'une quelconque des revendications 1 à 3, caractérisé en ce que le titane est introduit sous forme de tétrachlorure.

5. Procédé selon l'une quelconque des revendications 1 à 4, caractérisé en ce que le sel de baryum utilisé est du nitrate de baryum, du chlorure de baryum ou du bromure de baryum.

6. Procédé selon l'une quelconque des revendications 1 à 5, caractérisé en ce que la base utilisée à la troisième étape est de l'ammoniaque.

7. Procédé selon l'une quelconque des revendications 1 à 6, caractérisé en ce que le traitement du précipité comprend des opérations de rinçage, de séchage et de calcination à une température comprise entre 1000 et 1300°C.

8. Procédé selon l'une quelconque des revendications 3 à 7, caractérisé en ce que ladite valeur déterminée du pH est 5,75.

9. Procédé selon l'une quelconque des revendications 3 à 7, caractérisé en ce que ladite valeur déterminée du pH est 7,35.

10. Procédé selon l'une quelconque des revendications 3 à 7, caractérisé en ce que ladite valeur déterminée du pH est 9,1.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 433 279 (MURATA Mfg)<br>* Page 3 *<br><br>--- | 1,4-6 | C 01 G 23/00<br>C 04 B 35/46 |
| A | CHEMICAL ABSTRACTS, vol. 82, no. 4, 1975, page 148, résumé no.19091v, Columbus, Ohio, US; & JP-A-74 69 599 (MURATA Mfg) 05-07-1974<br>* Résumé *<br><br>--- | 1,4-6 | |
| A | GB-A-2 161 472 (MURATA Mfg)<br><br>----- | | |

DOMAINES TECHNIQUES
RECHERCHES (Int. Cl.4)

C 01 G
C 04 B

Le présent rapport de recherche a été établi pour toutes les revendications

| Lieu de la recherche | Date d'achèvement de la recherche | Examinateur |
|---|---|---|
| LA HAYE | 11-08-1987 | LIBBERECHT-VERBEECK |